# EUROPEAN PATENT APPLICATION

(11) **EP 0 647 556 A2**
(43) Date of publication of application: **12.04.1995**
(21) Application number: 94115669.7
(22) Date of filing: 05.10.1994
(51) Int. Cl.: B62M 25/04, B62J 39/00, B62K 23/06

(54) **Indicator for a bicycle**

(30) Priority: 06.10.1993 JP 250267/93
(71) Applicant: SHIMANO INC., Osaka (JP)
(72) Inventor: Yamamoto, Seiji, c/o Shimano Inc., Sakai-shi, Osaka (JP)
(74) Representative: Herrmann-Trentepohl, Werner, Dipl.-Ing.

(57) **Abstract**

A gear indicator (5,7) for use on a bicycle having an actuating member which extends from an actuator such as a shift lever (2,3) to a gear change mechanism such as a derailleur. Movement of the actuating member causes the gear change mechanism to change gears. The gear indicator includes a fixed member having a first indicator (5), and a second indicator (7) disposed on the actuating member (4,6). The actuating member uninterruptedly passes by the first indicator. The location of the first and second indicators relative to each other indicates a gear currently engaged by the gear change mechanism.

## Description

### BACKGROUND OF THE INVENTION

### FIELD OF THE INVENTION

The present invention relates to an indicator for a bicycle which is operatively connected a speed changer such as a front derailleur or a rear derailleur to indicate speed stages of front gears or rear gears.

### DESCRIPTION OF THE RELATED ART

A typical indicator of this type is disclosed in Japanese Utility Model Publication No. 48-33173. This indicator includes a speed indicating pointer attached to a takeup element for winding an inner wire of a speed control cable, and a speed stage panel attached to an indicator case to display speed stages indicated by the pointer. Thus, this indicator has a construction to actuate the pointer or speed stage panel by utilizing, as a drive source, movement of the takeup element for winding the inner wire.

The construction noted above has a disadvantage of allowing only a limited range for selecting a mounting position of the indicator. That is, the takeup element usually is disposed adjacent a shift lever which naturally is located in a position where the rider can easily operate with a hand. In the conventional construction, therefore, the indicator is disposed adjacent a position to facilitate a manual operation by the rider. However, the indicator adjacent a position easy to operate with a hand is not necessarily easy to look at. This is true particularly where the bicycle has a dropped handlebar.

U.S. Patent No. 5,178,033 to Kund discloses an indicator construction whose mounting position may be selected relatively freely. In this patent, an indicator body rotatably supporting a speed scale in form, of a rotary drum is attached to a downtube. The rotary drum is rotatable with a pinion meshed with a rack connected to a wire extending adjacent the downtube. Thus, the rotary drum reflects movement of the wire.

The movement of the wire appears as amplified on the scale owing to a difference in diameter between the pinion in direct contact with the rack and the drum having the scale. This construction has the advantage of facilitating visual recognition of speed stages.

However, this construction has a drawback of being bulky. Further, this construction requires, as essential components thereof, relatively heavy objects including the pinion and a plate supporting the rack for taking out movement of the wire, the drum connected to the pinion, and a guide for guiding the rack plate to the pinion. The indicator body must therefore be secured to the downtube reliably. This imposes a limitation to selection of a mounting position of the indicator.

In addition, the wire must extend adjacent the rack plate to realize smooth movement of the rack relative to the pinion. It is therefore imperative for the wire to be supported by the downtube or the like adjacent the indicator.

Furthermore, since the indicator of this construction does not itself support the wire, linearity of the wire must be maintained constantly so that the rack may rotate the pinion smoothly also when a derailleur is operated by moving the wire in a direction to relax a return spring of the derailleur. For this purpose, the return spring of the derailleur must have an excessive strength which could encumber operation of a change speed actuator.

U.S. Patent No. 2,905,017 to Randolph discloses a bicycle change speed device with two separate wires extending thereinto from different directions, one of the wires being connected to a change speed actuator disposed adjacent a grip, and the other connected to a derailleur. This change speed device includes an indicator for indicating positions of the wire connected to the derailleur.

The device may be installed in a position remote from the change speed actuator adjacent the grip. The indicator has a function corresponding to that of the takeup element in the construction disclosed in Japanese Utility Model Publication No. 48-33173 noted above. Thus, the indicator is somewhat relieved from the restriction as to its mounting position.

However, according to the construction disclosed in this U.S. patent, the change speed device with the indicator must be fixed reliably to a handlebar or the like in order to prevent the wire connected to the change speed actuator from operating the wire connected to the derailleur directly without operating the change speed device. Thus, this construction also imposes a limitation to selection of a mounting position of the indicator.

In addition, the construction taught by Randolph must be mounted between the two separate wires connected to the change speed actuator and the derailleur, respectively. This construction cannot easily be installed on an existing bicycle with a single wire interconnecting a change speed actuator and a derailleur, without cutting the wire.

### SUMMARY OF THE INVENTION

The object of the present invention is to provide an indicator for a bicycle which overcomes the disadvantages of the prior art noted above. Specifically, the invention intends to provide an indicator of simple and light construction which may be installed in any position within a region where a speed control wire is present, giving priority to facility of observation by the rider, and without entailing the inconvenience of cutting the wire into two parts.

The above object is fulfilled, according to the present invention, by a gear indicator for a bicycle having an actuating member which extends from an actuator to a gear change mechanism, comprising:
a fixed member having a first indicator, wherein the actuating member uninterruptedly passes by the first indicator; and
a second indicator disposed on the actuating member, wherein the location of the first and second indicators relative to each other indicates a gear currently engaged by the gear change mechanism.

The above construction is not influenced by a position of a wire takeup element or the like since the relative position between the two indicators indicates speed stages, and one of the indicator may be disposed adjacent the actuating member while the other may be disposed on the actuating member. Both of the indicators may be formed small and light, and need not be fixed to a downtube or a handlebar. The indicators may be disposed, in principle, in any location where the actuating member is present, thus increasing the freedom for selecting a position of indicator installation.

In the indicator according to the present invention, the wire is substantially guided by opposite ends of the fixed member. Thus, the derailleur does not require an excessively strong return spring for constantly maintaining a pertinent part of the wire straight.

In a preferred embodiment of the invention, the actuating member comprises an ordinary inner wire, and the fixed member having the first indicator is coupled to an outer wire mounted on part of the inner wire. This further increases the freedom for selecting a position of indicator installation.

In a preferred embodiment, the second indicator has a position of connection to the inner wire, which is variable when the inner wire moves in excess of a moving distance necessary for a gear change operation. Consequently, the position of the second indicator relative to the inner wire is automatically varied when the control cable is permanently elongated with a time-dependent change. In this way, a permanent elongation of the wire and the like is automatically adjusted. This automatic adjustment may be utilized also when the indicator is installed initially. This provides the advantage of dispensing with zero point adjustment of a position of the second indicator installed. It is noted that the question of error due to a permanent elongation remains unsolved in all of the constructions disclosed in the prior publications noted hereinbefore.

In a different embodiment of the present invention, the second indicator is mounted on the inner wire. Part of the outer wire is cut off, and the second indicator is mounted on the inner wire thereby exposed. An indicator case of two-part construction is fitted around the inner wire to contain the second indicator. This does not require the wire to be cut into two parts, and besides allows the indicator to be installed without detaching the control cable from the bicycle.

Other features and advantages of the present invention will be apparent from the following description.

### BRIEF DESCRIPTION OF THE DRAWINGS

Fig. 1 is a plan view of an indicator for a bicycle according to the present invention as attached to a handlebar.

Fig. 2 is a sectional view of the indicator shown in Fig. 1.

Fig. 3 is a plan view of an indicator in another embodiment of the invention.

Fig. 4 is a plan view of an indicator in a further embodiment of the invention.

Fig. 5 is a view showing a longitudinal section of the indicator of Fig. 4.

Fig. 6 is a view showing a cross section of the indicator of Fig. 4.

Fig. 7 is an exploded perspective view of the indicator of Fig. 4.

Fig. 8 is a sectional view of a movable indicating element used in the indicator of Fig. 4.

Fig. 9 is a sketch of a modified movable indicating element.

### DETAILED DESCRIPTION OF THE PREFERRED EMBODIMENTS

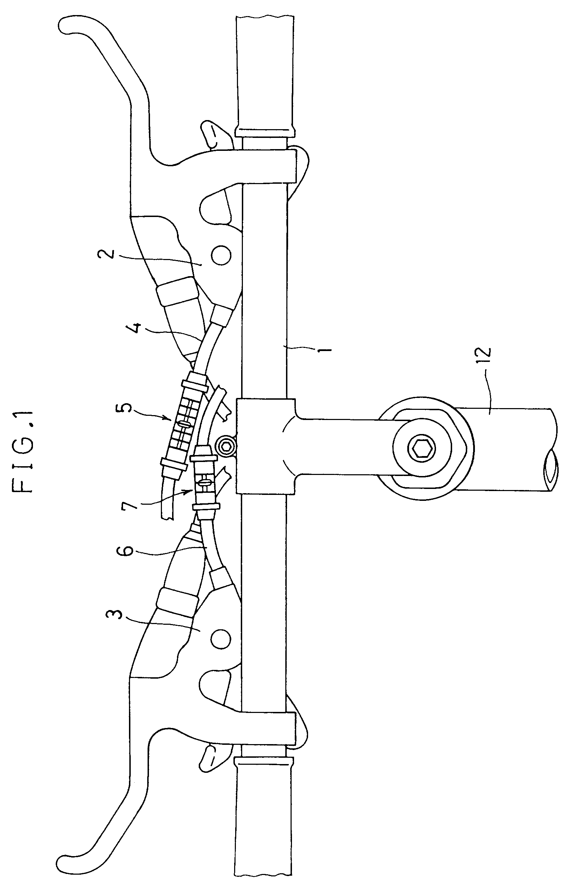

Fig. 1 shows an indicator according to the present invention disposed adjacent a handlebar 1. The handlebar 1 supports a rear shifting device 2 attached to a right portion thereof for shifting a rear derailleur not shown, and a front shifting device 3 attached to a left portion for shifting a front derailleur not shown. The rear shifting device 2 has a control cable 4, and a rear speed indicator 5 is attached to the control cable 4 for indicating speed stages of the rear derailleur. The front shifting device 3 has a control cable 6, and a front speed indicator 7 is attached to the control cable 6 for indicating speed stages of the front derailleur.

The two indicators 5 and 7 show different numbers of speed stages, and move in opposite directions in response to shifts from a smaller sprocket to a larger sprocket. However, in this embodiment at least, these indicators 5 and 7 have essentially the same construction, and the following description will be made, taking the rear speed indicator 5 for example.

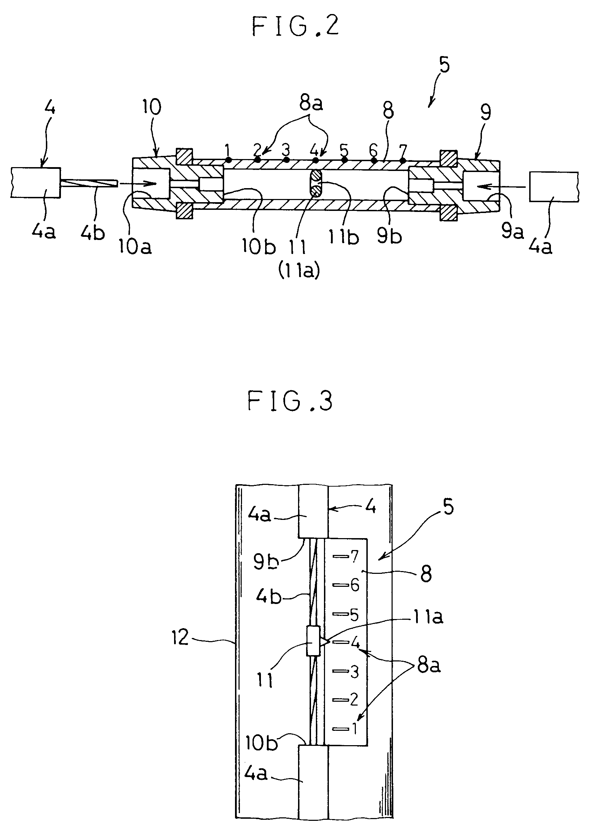

As seen from a sectional view in Fig. 2, the rear speed indicator 5 includes a tubular member 8 which is one example of fixed member having a first indicator, a first coupling 9 and a second coupling 10 detachably attached to opposite ends of the tubular member 8, and a movable indicating element 11 acting as a second indicator mounted in the tubular member 8 to be slidable longitudinally thereof. The tubular member 8 is formed of a transparent material such as plastic.

The first coupling 9 includes a coupling portion 9a for receiving and fastening an outer wire 4a of the control cable 4, and a first stopper 9b for contacting the movable indicating element 11. Similarly, the second coupling 10 includes a coupling portion 10a for receiving and fastening an outer wire 4a of the control cable 4, and a second stopper 10b for contacting the movable indicating element 11.

The movable indicating element 11 is formed of a slightly elastic material such as plastic or rubber, and has an annular overall shape with an outer periphery thereof acting as a pointer 11a for indicating speed stages in cooperation with the tubular member 8. The movable indicating element 11 defines a central bore 11b for receiving an inner wire 4b of the control cable 4. The bore 11b has an inside diameter smaller than the diameter of the inner wire 4b. Consequently, the movable indicating element 11 press fits on the inner wire 4b extending through the bore 11b. That is, the bore 11b acts as a coupling of the movable indicating element 11 for connection to the inner wire 4b. Once the inner wire 4b is connected to the movable indicating element 11, the movable indicating element 11 is in principle slidable with the inner wire 4b inside the tubular member 8. That is, the movable indicating element 11 having the pointer 11a of the indicator 5 is operable, using movement of the inner wire 4b as a direct drive source.

The transparent tubular member 8 has speed stage indicia 8a acting as the first indicator corresponding to speed stages of the rear derailleur. The pointer 11a is visible through the tubular member 8. The rider may read a current speed stage of the rear derailleur from the speed stage indicia 8a, i.e. the first indicator, of the tubular member 8 indicated by the pointer 11a.

A sequence and function to attach the indicator 5 of the present invention to the control cable 4 will be described next.

First, as shown in Fig. 2, the inner wire 4b of the control cable 4 is inserted through one of the first coupling 9 and second coupling 10. An end of the inner wire 4b moves into register with the bore 11b of the movable indicating element 11. Since the bore 11b is smaller in diameter than the inner wire 4b, the inner wire 4b pushes the movable indicating element 11. In the example shown in Fig. 2, the inner wire 4b is inserted through the second coupling 10, and pushes the movable indicating element 11 into contact with the first stopper 9b of the first coupling 9. As the inner wire 4b is further inserted, the inner wire 4b extends through the bore 11b of the movable indicating element 11, and the end of the inner wire 4b projects from the first coupling 9.

In this state, the inner wire 4b is pulled out and passed through the outer wire 4a opposed to the first coupling 9. Ends of the opposite outer wires 4a are fitted into the opposite coupling portions 9a and 10a. The end of the outer wire 4a extending from the first coupling 9 is attached to a takeup element of the rear shifting device 2, to maintain the movable indicating element 11 in contact with the first stopper 9b. Then, the rear derailleur is set by the rear shifting device 2 to a seventh speed which, in the example shown in Fig. 2, is the stage closest to the first coupling 9. By the above series of steps taken, the positions indicated by the pointer 11a may be correlated to actual speed stages of the derailleur when the indicator 5 is first installed.

When the shifting device 2 is operated thereafter to shift the derailleur to the sixth speed, for example, the movable indicating element 11 press fitted on the inner wire 4b moves with the inner wire 4b, whereby the pointer 11a indicates the sixth speed on the speed stage indicia 8a. Similarly, the derailleur is shifted successively to the fifth speed, fourth speed and so on, and the pointer 11a indicates these speeds with backward movement of the inner wire 4b.

In this way, once the indicator 5 is installed, the pointer 11a in principle moves with the inner wire 4b at all times, using the movement of the inner wire 4b as its power source. When the inner wire 4b is permanently elongated, the elongation is automatically rectified by action of the first and second stoppers 9b and 10b. The pointer 11a of the indicator 5 constantly indicates correct speed stages, substantially without influences of elongation of the inner wire 4b and the like.

That is, even if the inner wire 4b is elongated, for example, the movable indicating element 11 contacts the second stopper 10b whenever the derailleur is shifted to the first speed, and the first stopper 9b whenever the derailleur is shifted to the seventh speed. Such contact will automatically adjust a position in which the movable indicating element 11 press fits on the inner wire 4b.

This automatic adjusting function is performed in precisely the same way when the end of the inner wire 4b is attached initially or reattached to the takeup element or derailleur, as when the inner wire 4b is permanently elongated or shrunken. This dispenses with a step of effecting a zero point adjustment to the mounting position of the movable indicating element 11.

As will be understood from the foregoing description, since the indicator 2 according to the present invention uses movement of the inner wire 4b as a power source, the indicator 2 is subjected to no restriction as to its mounting position, the only requirement being presence of the inner wire 4b. Thus, the indicator 2 may be installed in any position suited to each individual rider.

Other embodiments will be described hereinafter.
(1) In the foregoing embodiment, movement of the inner wire 4b is used as the power source to operate the movable indicating element 11. Alternatively, movement of the outer wire 4a may be used as the power source to operate the movable indicating element 11. In this case also, variations in relative position between the outer wire 4a and inner wire 4b due to elongation of the inner wire 4b or the like are automatically adjustable by the function of the stoppers 9b and 10b formed on the first coupling 9 and second coupling 10. As a result, the speed stages are indicated correctly at all times.
(2) The fixed tubular member 8 may be formed of a lens to enable a magnified view, instead of a simple, transparent material of uniform thickness. Then, the pointer 11a, which may be relatively small and move through a limited range, may present a magnified form and movement to assure a reliable reading of the speed stages. In this case, the tubular member 8 may be wholly or partly formed of a lens.
(3) The fixed member 8 is not limited to a tubular shape as described hereinbefore, but may be in form of a tape as shown in Fig. 3, for example. Specifically, this fixed member 8 has speed stage indicia 8a formed on a front surface of the tape, and an adhesive applied to a back surface thereof. This tape is affixed, for example, to a top tube of a bicycle frame, to cooperate with a movable indicating element 11 connected to the inner wire 4b. The movable indicating element 11 may also be affixed to the inner wire 4b with an adhesive, or may be in form of an elastic ring with one end cut out for fitting on the inner wire 4b. Then, the indicator according to the present invention may be installed on a bicycle already having a conventional indicator, without detaching the control cable from the bicycle once. This is done by cutting out part of the outer wire 4a, attaching an exposed part of the inner wire 4b to the movable indicating element 11, and then affixing the tape 8 to a top tube 12 opposed to the pointer 11a of the movable indicating element 11.
   When press fitting the movable indicating element 11 on the inner wire 4b, and cutting out the outer wire 4a, the cutout may be made to correspond in length to the speed stage indicia 8a on the tape 8. Opposite ends of the cutout of the outer wire 4a may then act as the first and second stoppers 9b and 10b to rectify elongation of the inner wire 4b automatically. Where the ends of the cutout are unavailable as the stoppers 9b and 10b, such stoppers 9b and 10b may of course be added to the tape 8 for contacting the movable indicating element 11.

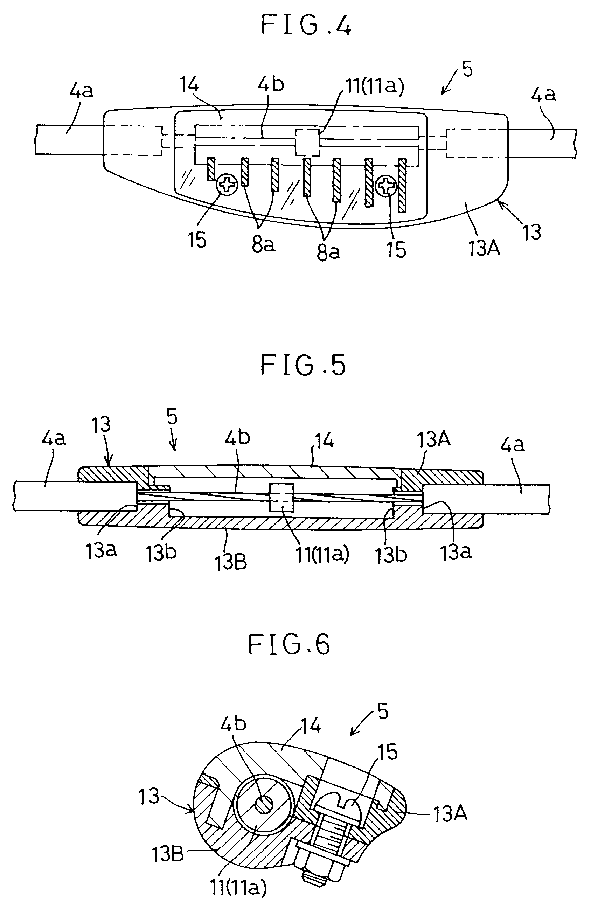

(4) Figs. 4 through 7 show a further embodiment of the invention. This indicator 5 includes a fixed case 13 shaped to have right and left portions bulging out to slightly different extents, and including a window 13c for viewing its interior with an inner wire 4b extending therethrough. A movable indicating element 11, i.e. a second indicator, is mounted in the case 13 to be movable with the inner wire 4b. The window 13c of the case 13 is covered by a transparent plate 14 marked with speed stage indicia 8a acting as a first, fixed indicator. Preferred materials for forming the case 13 include a metal such as aluminum die casting and a plastic such as polyoxymethylene (POM). The transparent plate 14 covering the case window 13c may be formed of a plastic such as polycarbonate. The case 13 includes couplings 13a formed at opposite ends thereof for connecting outer wires 4a. Stoppers 13b are formed at opposite inner ends of the case 13 for limiting movement of the movable indicating element 11 to a predetermined range. In this embodiment, the transparent plate 14 covering the window 13c is secured to the case 13 by screws 15.

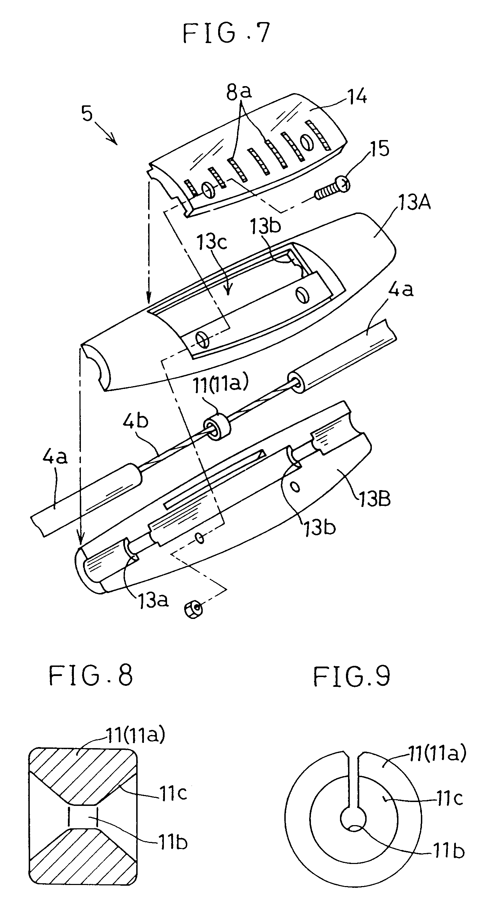

Fig. 8 is a sectional view showing one example of movable indicating element 11. This movable indicating element 11 basically comprises a ring element symmetrical about an axis thereof. The movable indicating element 11 has a bore 11b extending therethrough. The bore 11b has a diameter determined such that the movable indicating element 11 press fits on the inner wire 4b extending through the bore 11b, and that the movable indicating element 11 is movable relative to the wire 4b when the latter moves in excess of a predetermined length. Further, the movable indicating element 11 defines slopes 11c for guiding the wire 4b to the bore 11b.

Fig. 9 shows a modification of the movable indicating element 11 shown in Fig. 8. This movable indicating element 11 is in form of a ring with a radial cutout to receive a wire approaching from a radial direction.

The case 13 has two case parts 13A and 13B joined on a plane including an axis along which the inner wire 4b passes. Thus, by cutting out part of the outer wire 4a, the case 13 may be installed without detaching the control cable from the bicycle once. Since the transparent plate 14 covering the window 13c is attachable to the case 13 from outside, the movable indicating element 11 shown in Fig. 9, which is also attachable from outside, as well as the fixed member may be attached to the outer wire and inner wire without detaching these wires from the bicycle. Thus, the entire indicator may be installed without detaching the control cable.

The movable indicating elements 11 shown in Figs. 8 and 9 may preferably be formed of an elastic material such as elastomer.

This embodiment may be modified to use a magnifying lens for forming the transparent plate 14 covering the window 13c. This facilitates visual recognition of the movable indicating element.

As shown in Fig. 4, the speed stage indicia 8a may comprise bars of varied lengths to represent gear sizes for different speed stages. In this way, a gear currently engaged may be indicated graphically rather than numerically to enable a quick recognition of running conditions.

## Claims

1. A gear indicator for a bicycle having an actuating member which extends from an actuator to a gear change mechanism so that movement of the actuating member causes the gear change mechanism to change gears, said gear indicator comprising:
a fixed member having a first indicator, wherein the actuating member uninterrruptedly passes by the first indicator; and
a second indicator disposed on the actuating member, wherein the location of the first and second indicators relative to each other indicates a gear currently engaged by the gear change mechanism.

2. A gear indicator according to claim 1, characterized in that the fixed member comprises an elongated member.

3. A gear indicator according to claim 2, characterized in that the first indicator comprises indicia disposed along the elongated member.

4. A gear indicator according to claim 2, characterized in that the first indicator comprises an indicating member attached to the elongated member.

5. A gear indicator according to claim 2, characterized in that the second indicator comprises indicia disposed on the actuating member.

6. A gear indicator according to claim 2, characterized in that the second indicator comprises an indicating member attached to the actuating member.

7. A gear indicator according to claim 6, characterized in that the indicating member is attached to the actuating member and unconnected from any other structure.

8. A gear indicator according to claim 2, characterized in that the first indicator comprises an indicating member attached to the actuating member, and wherein the second indicator comprises indicia disposed on the actuating member.

9. A gear indicator according to claim 2, characterized in that the first indicator comprises indicia disposed on the elongated member, and wherein the second indicator comprises an indicating member attached to the actuating member.

10. A gear indicator according to claim 1, characterized in that the fixed member comprises an elongated indicator housing having a portion surrounding the actuating member.

11. A gear indicator according to claim 10, characterized in that the indicator housing has a first end surrounding the actuating member, and a second end also surrounding the actuating member.

12. A gear indicator according to claim 11, characterized in that the indicator housing is formed as a tubular member having an opening through which the first and second indicators are visible.

13. A gear indicator according to claim 12, further comprising a lens disposed in the opening for viewing the first and second indicators.

14. A gear indicator according to claim 13, characterized in that the lens comprises a magnifying lens.

15. A gear indicator according to claim 1, characterized in that the second indicator is movable relative to the first indicator substantially in the same direction and at the same speed as the actuating member.

16. A gear indicator for a bicycle having a wire which extends from an actuator to a gear change mechanism so that movement of the wire causes the gear change mechanism to change gears, said gear indicator comprising:
a fixed member having a first indicator disposed thereon, wherein the wire uninterruptedly passes by the first indicator; and
a second indicator disposed on the wire, wherein the location of the first and second indicators relative to each other indicates a gear currently engaged by the gear change mechanism.

17. A gear indicator according to claim 16, further comprising a guide disposed in close proximity to the wire for guiding the wire from the actuator to the gear change mechanism.

18. A gear indicator according to claim 17, characterized in that the fixed member is coupled to the guide.

19. A gear indicator according to claim 18, characterized in that the fixed member comprises an elongated indicator housing having a first end surrounding the actuating member, and a second end also surrounding the actuating member.

20. A gear indicator according to claim 19, characterized in that the guide comprises a wire housing, the wire housing having a first end for engaging the first end of the indicator housing and a second end for engaging the second end of the indicator housing.

21. A gear indicator according to claim 20, characterized in that a portion of the wire is exposed between the first end of the housing and the second end of the housing, and wherein the second indicator is disposed on the exposed portion of the wire.

22. A gear indicator according to claim 21, characterized in that the wire is exposed along its entire length from the first end of the housing to the second end of the housing.

23. A gear indicator for a bicycle having an actuating member which extends uninterruptedly from an actuator to a gear change mechanism so that movement of the actuating member causes the gear change mechanism to change gears, wherein the actuating member passes by a reference member so that the actuating member moves relative to the reference member when the gear change mechanism is changing gears, said gear indicator comprising:
a first indicator disposed on the actuating member; and
a second indicator disposed on the reference member so that the location of the first and second indicators relative to each other indicates a gear currently engaged by the gear change mechanism.

24. A gear indicator according to claim 23, characterized in that the actuating member comprises a wire extending uninterrupted from the actuator to the gear change mechanism.

25. A gear indicator for a bicycle having an actuating member which extends from an actuator to a gear change mechanism so that movement of the actuating member causes the gear change mechanism to change gears, said gear indicator comprising:
first and second guides disposed adjacent the actuating member and spaced apart from each other for guiding the actuating member past a first indicator, the first and second guides defining an axis, wherein the actuating member passes from the first guide to the second guide along the axis; and
a second indicator disposed on the actuating member, wherein the location of the first and second indicators relative to each other indicates a gear currently engaged by the gear change mechanism.

26. In a bicycle having an actuating member which extends from an actuator to a gear change mechanism so that movement of the actuating member causes the gear change mechanism to change gears, a method of indicating a gear engaged by the gear change mechanism comprising the steps of:
disposing a first indicator on a fixed member;
uninterrupted passing the actuating member by the first indicator;
disposing a second indicator on the actuating member; and
indicating a gear currently engaged by the gear change mechanism by the location of the first and second indicators relative to each other.

27. In a bicycle having an actuating member which extends from an actuator to a gear change mechanism so that movement of the actuating member causes the gear change mechanism to change gears, a method of indicating a gear engaged by the gear change mechanism comprising the steps of:
disposing first and second guides adjacent the actuating member and spaced apart from each other for guiding the actuating member past a first indicator, the first and second guides defining an axis;
passing the actuating member from the first guide to the second guide along the axis;
disposing a second indicator on the actuating member; and
indicating a gear currently engaged by the gear change mechanism by the location of the first and second indicators relative to each other.

28. A speed indicator for a bicycle for indicating speed stages of a speed changer operable by a pulling force of an inner wire, comprising:
a fixed indicating member fixed to one of a bicycle frame and an outer wire and having a speed stage display surface; and
a movable indicating member connected to the inner wire for indicating a speed stage on the speed stage display surface, the movable indicating member being movable in response to movement of the inner wire by the pulling force, within a range at least corresponding to a moving distance of the inner wire necessary for a gear change operation.

29. A speed indicator according to claim 28, characterized in that the movable indicating member has a position of connection to the inner wire, which is variable when the inner wire moves in excess of the moving distance necessary for the gear change operation.

30. A speed indicator according to claim 29, characterized in that the fixed indicating member comprises stopper means for contacting the movable indicating member and varying the position of connection to the inner wire when the inner wire moves in excess of the moving distance necessary for the gear change operation.

31. A speed indicator according to claim 28, characterized in that the movable indicating member has a position of connection to the inner wire, which is variable when the inner wire moves in excess of the moving distance necessary for the gear change operation, and wherein the fixed indicating member comprises stopper means for contacting the movable indicating member and limiting movement of the movable indicating member within the range corresponding to the moving distance of the inner wire necessary for the gear change operation, when the inner wire moves in excess of the moving distance necessary for the gear change operation.

32. A speed indicator according to claim 29, characterized in that the movable indicating member comprises a ring mounted on the inner wire, the movable indicating member being connected to the inner wire through a bore defined in the ring, the bore having an inside diameter determined for allowing the inner wire to be press fit in the bore.

33. A speed indicator according to claim 32, characterized in that the ring has a circumferentially discontinuous portion for mounting on the inner wire approaching radially of the ring.

34. A speed indicator according to claim 32, characterized in that the ring defines inclined surfaces for guiding the inner wire to the bore.

35. A speed indicator according to claim 32, characterized in that the ring is formed of an elastic material.

36. A speed indicator according to claim 28, characterized in that the movable indicating member has an axis extending along a moving direction of the movable indicating member relative to the fixed indicating member, the movable indicating member having rotation symmetry with respect to the axis, and plane symmetry with respect to a plane perpendicular to the axis.

37. A speed indicator according to claim 28, characterized in that the fixed indicating member has coupling means for fixing the indicator to one of the bicycle frame and the outer wire.

38. A speed indicator according to claim 37, characterized in that the coupling means comprises recesses formed at opposite ends of the fixed indicating member for receiving and engaging ends of the outer wire.

39. A speed indicator according to claim 37, characterized in that the fixed indicating member comprises a tubular member for slidably receiving the inner wire having the movable indicating member, the tubular member allowing visual recognition of at least a position of the movable indicating member.

40. A speed indicator according to claim 37, characterized in that the fixed member comprises a case for slidably receiving the inner wire having the second indicator, the case allowing visual recognition of at least a position of the second indicator.

41. A speed indicator according to claim 28, characterized in that the case comprises a window for viewing at least a position of the movable indicating member from outside.

42. A speed indicator according to claim 41, characterized in that the case comprises two parts separable along a plane including the axis of the movable indicating member.

43. A speed indicator according to claim 28, characterized in that the window of the case is covered by a shielding plate through which a case interior is visible.

44. A speed indicator according to claim 43, characterized in that the shielding plate comprises a lens for viewing at least the movable indicating member in the case in magnification.

45. A speed indicator according to claim 44, characterized in that the shielding plate is formed substantially entirely of the lens for viewing the case interior in magnification.

46. A speed indicator according to claim 28, characterized in that the speed changer comprises gears of different diameters, and wherein the speed stage display surface graphically represents the diameters of the gears.
